Europäisches Patentamt

European Patent Office

Office européen des brevets

(11) Veröffentlichungsnummer: **0 224 686**
**A2**

## EUROPÄISCHE PATENTANMELDUNG

(21) Anmeldenummer: 86114113.3

(22) Anmeldetag: 11.10.86

(51) Int. Cl.⁴: **G02B 26/10**

(30) Priorität: 02.12.85 DE 3542502

(43) Veröffentlichungstag der Anmeldung:
**10.06.87 Patentblatt 87/24**

(84) Benannte Vertragsstaaten:
**BE CH FR GB IT LI NL SE**

(71) Anmelder: **ELEKTRO-OPTIK GmbH & Co. K.G.**
**Fördestrasse 35**
**D-2392 Glücksburg(DE)**

(72) Erfinder: **Menke, Josef-Ferdinand, Dipl.-Ing.**
**Fördestrasse 27**
**D-2392 Glücksburg(DE)**

(74) Vertreter: **Riecke, Manfred**
**Neuköllner Strasse 8**
**D-6333 Braunfels(DE)**

(54) **Thermograph mit Umschaltung des Bildwinkels.**

(57) Es wird ein Thermograph mit Umschaltung des Bildwinkels beschrieben. Der Thermograph besteht in bekannter Weise aus einem Teleskop, einem Scanner und einem nachgeschalteten Detektor mit vorgesetzter Detektoroptik. Die Vergrößerung des Gesamt-Gerätes ist gegeben durch das Verhältnis der Aperturen der Eintrittspupille vom Teleskop-Objektiv zur Eintrittspupille der Detektoroptik. Es wird vorgeschlagen, dieses Aperturverhältnis und damit den Bildwinkel des Gerätes dadurch umzuschalten, daß unter Beibehaltung der Pupillenlage und der Lage der Bildebene die Apertur der Eintrittspupille der Detektoroptik geändert wird. Für Fälle, in denen der gewünschte Änderungsfaktor n zu groß ist, um die Konstanz der Pupillen-und Bildebenenlage zu gewährleisten, wird vorgeschlagen, gleichzeitig die Detektoroptik und das Teleskop-Okular um jeweils den Faktor $\sqrt{n}$ zu ändern.

Fig. 2

## Thermograph mit Umschaltung des Bildwinkels

Die Erfindung betrifft einen auf mindestens zwei verschiedene Bildwinkel umschaltbaren Thermographen, der in bekannter Weise aus einem Teleskop mit Objektiv und Okular, ferner aus einem Scanner und einem hinter dem Scanner und einer Detektor-Optik angeordneten IR-Detektor besteht. Dieses Gesamtsystem hat eine 1.Bildebene zwischen Objektiv und Okular und eine 2.Bildebene auf dem Detektor.

Wenn es bei einem Thermographen dieser konventionellen Bauart erwünscht ist, einen anderen Bildwinkel zu erfassen, d.h. auf einen anderen Bildwinkel ( = andere Vergrößerung) umzuschalten, so geschieht dies bisher vorzugsweise dadurch, daß das Teleskop-Objektiv umgeschaltet wird.

Dies hat jedoch erhebliche Nachteile. Vor allem ist mit der Objektiv-Umschaltung der Verlust der Lage and Größe der Eintrittspupille des Objektivs um den Faktor der Vergrößerungsänderung verbunden. Außerdem ist eine größere Masse zu bewegen, denn die Teleskop-Objektive derartiger Thermographen haben in aller Regel einen größeren Durchmesser; Standarddurchmesser ist z.B. 200 mm. Die Umschaltung eines derartig großen Objektivs erfordert naturgemäß auch eine längere Zeit, die bei vielen Verwendungsarten nicht zur Verfügung steht.

Der Erfindung liegt die Aufgabe zugrunde, diese Nachteile zu überwinden. Es soll ein Thermograph geschaffen werden, der folgende Erfordernisse erfüllt:
schnelle Umschaltmöglichkeit des Bildwinkels, Beibehaltung der Größe der Eintrittspupille EP des Objektivs.

Diese Aufgabe ist durch einen Thermographen gelöst, der die in Anspruch 1 angegebenen Merkmale aufweist. Weitere Merkmale sind in den Unteransprüchen angegeben.

Gemäß den Merkmalen des Anspruches 1 liegt der Hauptgedanke der Erfindung darin, die Umschaltung auf eine andere Vergrößerung nicht mehr durch die Umschaltung des Objektivs zu bewirken, sondern zu diesem Zweck ein inneres optisches Bauelement umzuschalten. Dadurch bleiben die Lage und Größe der Eintrittspupille des Teleskopobjektivs erhalten. Es bleiben aber auch erhalten die Lagen der Austrittspupille des Teleskops und der Eintrittspupille der Detektor-Optik. Geändert wird lediglich die Größe dieser inneren Pupillen, d.h. deren Apertur, so daß insgesamt das Aperturverhältnis zwischen EP und AP (bzw. $EP_{Detektoroptik}$) und damit die Vergrößerung geändert wird.

Da das innere optische Bauelement in seinen Abmessungen wesentlich kleiner ist als das Teleskopobjektiv, ist es naturgemäß leichter und kann daher schneller bewegt werden; d.h. die Umschaltung kann erheblich schneller geschehen als bei den Geräten nach dem Stand der Technik.

Als "inneres optisches Bauelement", das zum Zwecke der Vergrößerungsänderung umgeschaltet werden kann, bietet sich vor allem die Eingangsoptik des IR-Detektors an. Wenn die Vergrößerungsänderung allein durch Änderung dieser Optik bewirkt wird, ändert sich am Teleskop überhaupt nichts, d.h. neben der Lage von dessen Eintritts-und Austrittspupille bleibt auch deren Größe erhalten. Der Faktor der Vergrößerungsänderung ist dann einfach definiert durch das Verhältnis der Größen von $EP_{Teleskop}$ zu $EP_{Detektorobptik}$.

Allerdings ist diese Möglichkeit nur gegeben bei relativ kleinem Vergrößerungs-Änderungsfaktor n. Bei einem höheren Faktor n wird es schwer bzw. ganz unmöglich, die Detektoroptik derart zu berechnen, daß die Lage ihrer Eintrittspupille im Verhältnis zur Lage der Austrittspupille des Teleskopes und die Lage der Bildebene auf dem Detektor erhalten bleiben.

Es wird daher ferner vorgeschlagen, bei höherem Faktor n, die Vergrößerungsänderung durch Umschalten von zwei inneren optischen Bauelementen zu bewirken, nämlich durch gleichzeitige Änderung des Tekeskop-Okulars und der Detektoroptik, von denen jedes Teil um den Faktor $\sqrt{n}$ geändert wird. Die gleichzeitige Änderung an diesen beiden Stellen um den Faktor $\sqrt{n}$ ergibt dann wiederum eine Änderung um den Gesamtfaktor n. Aber durch die Aufteilung der Gesamt-Vergrößerungsänderung auf zwei verschiedene optische Bauelemente kann die Änderung jedes Elementes so gering gehalten werden, daß auch in diesem Falle die Lage der Pupillen nicht geändert wird. Geändert wird lediglich die Größe der Pupillen und damit die Apertur des Gesamtgerätes.

Konkret: Wenn der Bildwinkel des Gesamtgerätes im Verhältnis 1:2 umgeschaltet werden soll, so wird (bei Aufteilung der Änderung auf zwei innere optische Bauelemente) das Teleskopokular derart geändert, daß bei Erhalt ihrer Lage die Austrittspupille des Teleskopes im Verhältnis 1: $\sqrt{2}$ kleiner wird. Gleichzeitig wird die Optik für den Detektor derart umgeschaltet, daß die Brennweite der Detektoroptik um den Faktor 1: $\sqrt{2}$ größer wird.

Technisch kann die Umschaltung der Bauteile z.B. dadurch realisiert werden, daß dieselben auf Schiebern oder Revolvern angeordnet werden. Im Falle der Änderung an zwei Stellen, d.h. am Okular und Detektoroptik, können die Schieber bzw. Revolver mechanisch miteinander verbunden sein, so daß auf alle Fälle eine einzige Bewegung ausreicht, um die Vergrößerungsänderung herbeizuführen.

Die Umschaltung des Bildwinkels erfordert auch einen Eingriff in die Steuerelektronik des Scanners. Diese Umschaltung der Steuerelektronik ist erforderlich zur Aufrechterhaltung des Bildformates und ist abhängig vom Vergrößerungs-Änderungsfaktor n. Diese elektronische Umschaltung ist jedoch nicht Gegenstand der Erfindung und wird daher hier nicht weiter beschrieben.

In der Zeichnugn ist die Erfindung in einem Ausführungsbeispiel dargestellt. Es zeigen:

Fig. 1 schematisch den gestreckten Strahlengang eines Thermographen,

Fig. 2 schematisch den Strahlengang in einem Thermographen mit reflektivem Polygon und Schwenkspiegel,

Fig. 3 schematisch den Strahlengang in der Detektoroptik.

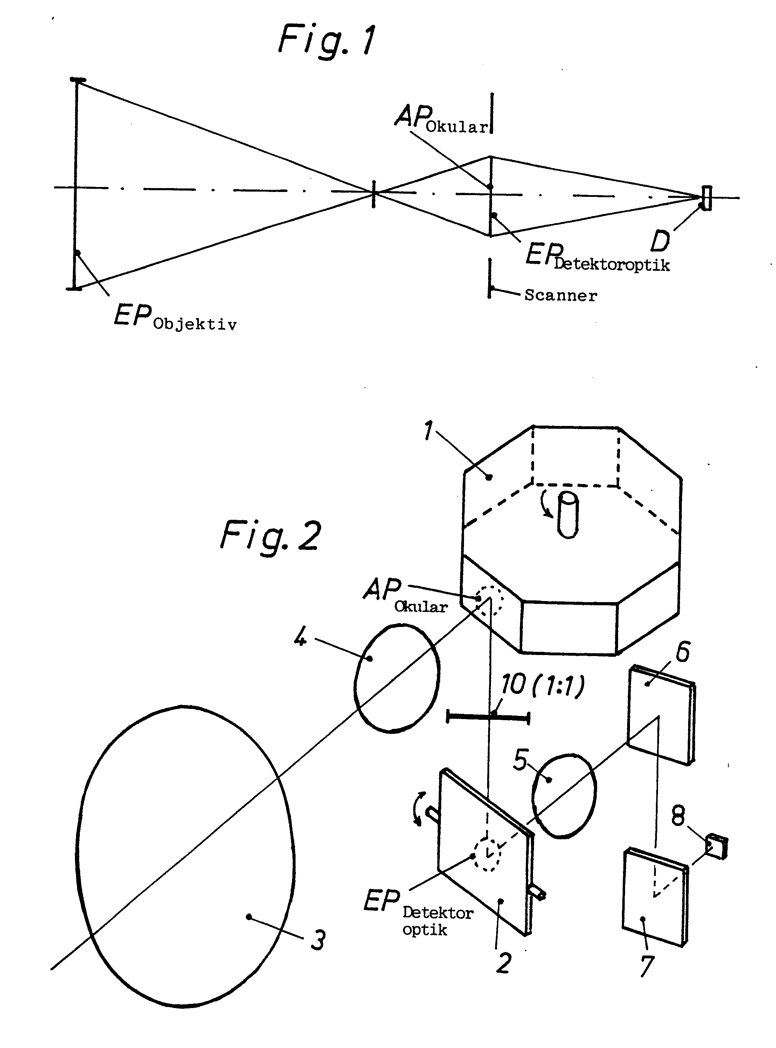

Fig.1 zeigt schematisch den Strahlenverlauf in einem Thermographen, wobei das Schema zum besseren Verständnis auf das absolute Minimum reduziert ist. Die Wärmestrahlen fallen in der Darstellung von links in die Eintrittspupille eines Teleskopobjektivs ($EP_{Objektiv}$) und gelangen nach den Gesetzen der geometrischen Optik in die Austrittspupille des Teleskop-Okulars ($AP_{Okular}$). Diese Austrittspupille liegt auf dem Basisscanner, der das Objektfeld durch das Teleskop in bekannter Weise zeilenweise abtastet. In der gleichen Ebene wie die $AP_{Okular}$ liegt die Eintrittspupille einer in Fig.1 nicht weiter gezeigten Detektoroptik, welche die Wärmestrahlen auf den Detektor 8 fokussiert. Diese Schema-Darstellung wurde gewählt, um zu zeigen, daß es für das Gerät funktionswesentlich ist, daß auf dem Scanner die $AP_{Okular}$ und die $EP_{Detektoroptik}$ tatsächlich zusammenfallen.

Etwas konkreter sind diese Bedingungen in Fig.2 gezeigt. Der Scanner besteht hier aus einem Spiegelpolygon 1 in Verbindung mit einem Kippspiegel 2. Vor dem Polygon 1 ist das Teleskop mit Objektiv 3 und Okular 4 angeordnet; hinter dem Kippspiegel 2 sitzen die Detektoroptik mit dem Eingangsobjektiv 5 und den Spiegeln 6 und 7, und schließlich dem Detektor 8 selbst.

In bekannter Weise erfolgt durch das rotierende Polygon 1 die zeilenweise Abtastung des Objektfeldes, während der Kippspiegel 2 den Höhenversatz der Zeilen bewirkt. Die Austrittspupille AP des Okulares liegt bei diesem Aufbau auf der Spiegelfläche des Polygons, während die Eintrittspupille der Detektoroptik ($EP_{Detektoroptik}$) auf dem Kippspiegel 2 liegt. Damit diese beiden Pupillen optisch zusammenfallen, wie in Fig.1 erläutert, ist zwischen Polygon und Kippspiegel noch eine 1:1-Optik 10 angeordnet, welche die $EP_{Detektoroptik}$ in die $AP_{Okular}$ abbildet bzw. umgekehrt.

Der Bildwinkel eines solchen Thermographen ist gegeben durch das Verhältnis der Größe $EP_{Objektiv}$ zu $AP_{Okular}$, die gleich ist der Größe von $EP_{Detektoroptik}$. Eine Änderung des Wildwinkels ( = Änderung des Vergrößerungsfaktors) läßt sich erreichen durch eine Änderung dieser Aperturverhältnisse, indem einfach das Teleskop-Objektiv ausgewechselt wird. Dies hätte den Vorteil, daß die Pupillenlagen von $AP_{Okular}$ und Detetkoroptik davon nicht berührt würden. Wie eingangs beschrieben sind damit jecoh Nachteile verbunden, wie z.B. die Verlagerung der Eintrittspupille des Objektivs und dgl., die durch die Erfindung gerade vermieden werden sollen. Es wird daher prinzipiell vorgeschlagen, die Änderung des Bildwinkels dadurch zu erreichen, daß die Größe der Eintrittspupille der Detektoroptik ($EP_{Detektoroptik}$) geändert wird.

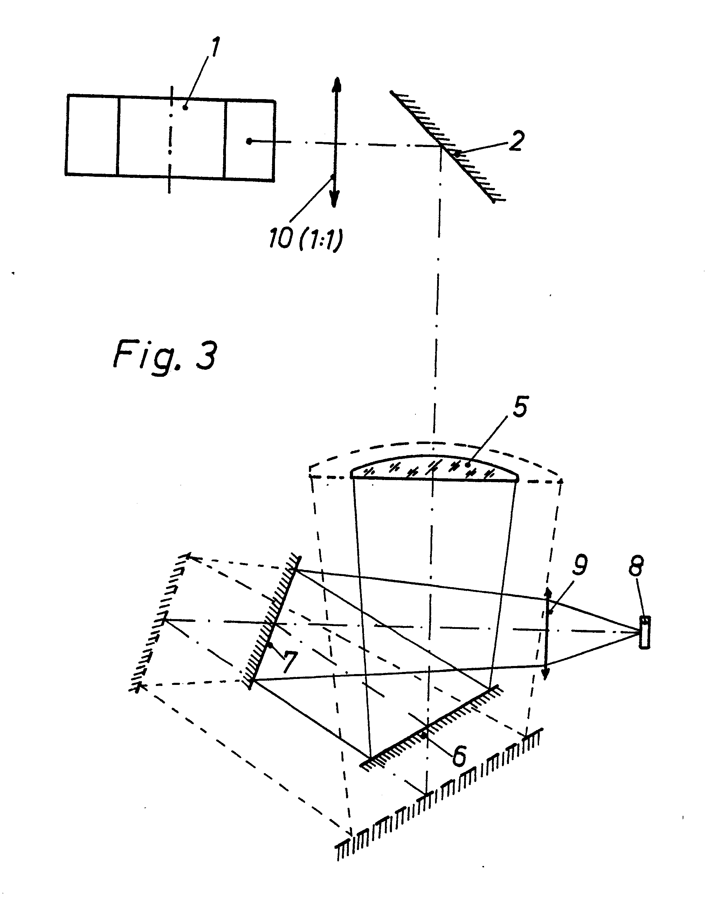

Wie Fig. 3 zeigt, kann dies durch Auswechslung der gesamten Detektoroptik 5, 6 und 7 geschehen. In dieser Figur sind die Bauelemente mit den gleichen Bezugszeichen belegt wie in Fig.2; das Teleskop ist jedoch weggelassen, da es aus der Zeichenebene herausragen würde.

Durch die Spiegel 6 und 7 ist der Strahlengang nach Art eines Pentaprismas gefaltet und gelangt über eine in Fig.2 nicht gezeigte Linse 9 zum Detektor 8.

Die Änderung der Apertur der Detektoroptik kann nun einfach dadurch geschehen, daß die mechanisch zu einer Baugruppe zusammengefaßten Elemente 5,6,7 und 9 gegen gleiche Elemente anderer optischer Abmessungen ausgetauscht werden, z.B. mittels eines Schiebers oder eines Revolvers. Wichtig ist dabei allerdings, daß die Lage der $EP_{Detektoroptik}$ auf dem Kippspiegel 2 und die Lage der Bildebene dieser Optik auf dem Detektor 8 erhalten bleiben.

Wenn die erwünschte Änderung des Bildwinkels, d.h. wenn der Änderungsfaktor n zu groß wird, wird es allerdings nicht mehr möglich sein, die genannten Lagen der Pupille und Bildebene aufrecht zu erhalten. In diesem Falle wird vorgeschlagen, die Detektoroptik nur um den Faktor $\sqrt{n}$ zu ändern, gleichzeitig aber auch das Okular um den gleichen Faktor $\sqrt{n}$ zu ändern. Dies bedeutet, daß der Gesamt-Änderungsfaktor n aufgespalten wird in zwei kleinere Änderungen, die zusammen den gewünschten Änderungsfaktor n ergeben. Detektorseitig ist dabei der Austausch der Bauelemente 5,6,7 und 9 der gleiche, nur mit weniger stark geänderten optischen Werten.

Die Änderung des Okulars bedingt lediglich eine andere optische Rechnung, wobei natürlich ebenfalls gewährleistet sein muß, daß die $AP_{Okular}$ ihre Lage auf den Polygon-Spiegelflächen nicht ändert.

Zweckmäßigerweise sind bei einer derartigen Ausführungsform die Detektoroptik und das Okular auf dem gleichen mechanischen Bauelement - (Schieber, Revolver) anzuordnen, damit die Bildwinkel-Umschaltung mit einer einzigen Handbewegung geschehen kann.

## Ansprüche

1.) Auf mindestens zwei verschiedene Bildwinkel umschaltbarer Thermograph mit einem Teleskop, einem Scanner und einem dem Scanner hinter einer Detektoroptik nachgeschalteten IR-Detektor, wobei das Gesamtsystem eine 1.Bildebene zwischen Objektiv und Okular und eine 2.Bildebene auf dem Detektor hat,
dadurch gekennzeichnet, daß zur Umschaltung des Bildwinkels des Gesamtsystems um den Faktor n ein inneres optisches Bauelement (4;5;6;7) um den Gesamtfaktor derart umgeschaltet wird, daß die Eintrittspupille des Objektivs und die weiteren Pupillenlagen und die Bildlagen beibehalten werden, unter Änderung der Größe (Apertur) der inneren Pupillen, und daß die Steuerelektronik des Scanners auf eine entsprechend andere Zeitbasis umgeschaltet wird.

2.) Thermograph nach Anspruch 1, dadurch gekennzeichnet, daß das um den Faktor n umgeschaltete innere optische Bauelement die dem Detektor (8) vorgschaltete Detektoroptik (5;6;7) ist.

3.) Thermograph nach Anspruch 1, dadurch gekennzeichnet, daß die Umschaltung des Bildwinkels um den Faktor n auf zwei verschiedene Bauelemente, nämlich auf das Okular (4) des Teleskops und auf die Eingangsoptik des Detektors (5;6;7) verteilt ist, von denen jedes um den Faktor $\sqrt{n}$ umgeschaltet wird.

4.) Thermograph nach den Ansprüchen 1 -3, dadurch gekennzeichnet, daß die umzuschaltenden optischen Bauelemente auf einem Schieber angeordnet sind, so daß die Auswechslung dieser Bauelemente durch eine Schiebebewegung erfolgt.

5.) Thermograph nach den Ansprüchen 1 -3, dadurch gekennzeichnet, daß die umzuschaltenden optischen Bauelemente auf einem Revolver angeordnet sind, so daß die Auswechslung dieser Bauelemente durch eine Kippbewegung bzw. eine Drehbewegung erfolgt.

6.) Thermograph nach den Ansprüchen 3 -5, dadurch gekennzeichnet, daß die Träger (Schieber, Revolver) der umzuschaltenden optischen Bauelemente mechanisch miteinander verbunden sind, so daß die Auswechslung mit einer einzigen Handbewegung bewirkt werden kann.

# Fig. 1

$AP_{Okular}$

$EP_{Detektoroptik}$

$D$

Scanner

$EP_{Objektiv}$

# Fig. 2

1

$AP_{Okular}$

4

$10\,(1:1)$

6

5

3

$EP_{Detektor\ optik}$

8

2

7

*Fig. 3*